# EUROPEAN PATENT APPLICATION

(11) **EP 4 715 749 A1**
(43) Date of publication of application: **25.03.2026**
(21) Application number: 24201509.7
(22) Date of filing: 20.09.2024
(51) Int. Cl.: G06T 17/20

(54) **COMPUTER-IMPLEMENTED METHOD FOR CREATING A MESH FOR SIMULATING AN OBJECT**

(71) Applicant: Volume Graphics GmbH, 69115 Heidelberg (DE)
(72) Inventor: OSYGUSS, Fabien, 69115 Heidelberg (DE); REITER, Sebastian, 69115 Heidelberg (DE)
(74) Representative: Patentanwälte Olbricht Buchhold Keulertz

(57) **Abstract**

The present invention relates to a computer-implemented method (100) for creating a mesh for simulating an object, the method (100) comprising:
- generating (101) a first mesh by means of object data of the object,
wherein the mesh comprises a plurality of spatially resolved structural
information relating to the object,
- representing (103) the first mesh by at least one graph,
- simplifying (105) the at least one graph by matching a subset of edges of the at least one graph that do not share any vertex,
- generating (107) a second simplified mesh based on the simplified at least one graph, wherein the matching is carried out simultaneously and in parallel using a plurality of processors.

## Description

The present invention relates to a computer-implemented method for creating a mesh for simulating an object, a system and a computer program product according to the attached claims.

Meshes serve as the predominant data structure for digitally representing 3D surfaces.

A mesh approximates a surface as faceted. It uses sets of triangles, edges and vertices that connect together and form a surface. With an increased prominence of digital non-destructive manufacturing processes, meshes are important tools of analysis, documentation and visualizations.

However, along with the growing demand for precision, additional challenges arise due to increased data volume. One important step in the digital workflow is, the simplification of a mesh. This process has to balance the performance, the precision, and the data volume. The goal is to produce a simplified mesh, as fast as possible, as accurate as possible, and using as few triangles as possible.

There is a wide range of applications for meshes, with varying requirements and many different construction methods. Therefore, the simplification of all types of meshes exhibits many different challenges and problems that a universal mesh simplification algorithm needs to consider. Stability to a wide variety of mesh defects is therefore very important. The algorithm should be able to preserve a manifold surface and not create non-manifolds.

On the other hand, it should be capable of handling already existing non-manifolds. Such non-manifold structures might be intentional, like borders, or might be defects.

Against this background, the problem to be solved is a so-called balanced graph partitioning problem.

According to a first aspect, the invention disclosed herein relates to Computer-implemented method for creating a mesh for simulating an object,

The disclosed method comprises generating a first mesh by means of object data of the object, wherein the mesh comprises a plurality of spatially resolved structural information relating to the object, representing the first mesh by at least one graph, simplifying the at least one graph by matching a subset of edges of the at least one graph that do not share any vertex, and generating a second simplified mesh based on the simplified at least one graph, wherein the matching is carried out simultaneously and in parallel using a plurality of processors.

The method disclosed herein is based a graph-based parallel mesh simplification algorithm, which processes non-manifold meshes while preserving their topology.

In particular, the method disclosed herein is bases on a partition a graph that contains additional constant weights at each vertex and each edge into a given number of blocks, while ensuring that each block contains a similar summed vertex weight. Additionally, the weight of the cut edges is as low as possible.

For that, a mesh is represented as at least one graph using the concept of so-called "edge valence", for example, which counts the number of unique triangles per edge. This edge valence may be used throughout the simplification process as proxy information for the existence of triangles and describes the topology of the object at that edge.

Since the method disclosed herein is based on a parallel approach using a plurality of processors to simultaneously carry out the matching for simplification of the first mesh, the method is highly efficient with respect to computational time. Further, the second mesh generated based on the simplified first mesh is compact and valid with respect to the original shape of the object.

The object data may be acquired using a computed tomography (CT) scanner.

According to an embodiment, the at least one graph represents the first mesh, wherein edges are used instead of triangles.

Using a graph-based framework, the whole simplification process operates exclusively on vertices and edges. Thus, an update of triangles during the simplification is avoided. Only at the end of the method, a final graph, which represents the whole simplification, is used to create a second mesh using simplified triangles in a single and fast processing step. This improves the performance of the overall method.

Based on the at least one graph, the simplification process is carried out at once and in parallel, i.e. in a parallel computing approach using a plurality of processors at the same time.

In the context of the present invention, a mesh is a faceted representation of a surface. It consists of vertices, edges, and faces. Commonly used are triangular meshes, where all faces are triangles. The vertices describe the coordinates of all the corners, whereas the faces and edges describe a connection of vertices and are represented as a set of vertex indices. These connections between the vertices describe the surface. The order of the vertices in a face typically encodes the normal of the surface. The edges describe an undirected connection, and the term half-edge is typically used when describing a directed edge. This term is motivated by the fact that an edge in a manifold is referenced by two triangles, which are ordered. And the ordered edges, induced by each triangle, constitute one direction of the edge each.

When an edge is collapsed, two vertices get merged, and the two vertices get mapped to the same new vertex. The new vertices after a simplification can be interpreted as a partition of the original vertices. Every new vertex represents a block of all the old vertices that are merged into it. The new simplified mesh is the quotient graph implied by the at least one graph. This allows representing the whole simplification process as a graph partition, which can be implemented as a single vector, called a vertex map, containing the final vertex index per initial vertex. This vertex map can be used to visualize and analyze the simplification process.

Additionally, the vertex map can be used to update the initial indices to the final indices in a single step. This allows for a very efficient update of the initial triangles by just updating the three vertex indices and filtering the triangles that become degenerate after the update. Thus, a vertex map, which represents the collapse of a matching, can easily be constructed, because every collapse is isolated.

Such vertex maps can also easily be stacked by mapping the existing entries in the map. This enables the construction of a map in each iteration from the determined matching and stack it into a total map that describes the whole simplification process.

According to an embodiment, the method focusses on handling and simplification of triangular meshes that are represented via a half-edge data structure, such that edges that are not part of a triangle do not exist. A half-edge data structure or doubly connected edge list is a common representation of a triangular mesh. It consists of a vertex list V and a triangle list T. V contains the vertex coordinates, and T holds the triangles, consisting of the three vertex indices. These indices reference locations in V and are ordered anticlockwise to encode the normal of the triangle. Edges are only implied by the vertex connections in the triangle data, and therefore every edge has at least one incident triangle, and isolated edges cannot be represented.

According to an embodiment, generating the second simplified mesh comprises replacing the edges of the at least one graph by triangles.

In order to maintain the surface connectivity information without needing to maintain triangles or triangle adjacency, the concept of edge valence is introduced. Edge valence represents the number of unique triangles that are incident on a given edge.

According to an embodiment, edge valence is used to encode a surface connectivity of the triangles into edges.

Usually, when working with meshes, the focus lies on the vertices or the triangles. But for an edge-collapse-based mesh simplification, the edges are of great importance. This motivates an explicitly edge-based data representation, but just expanding the mesh data to include edges would increase overall memory consumption and the amount of data to update, which lowers the performance. But it is possible to represent the mesh using edges instead of triangles. To do that, edge valence is used to encode the surface connectivity into edges. The edge valence describes the number of unique triangles incident at an edge. The edge valence is used to track the number of removed triangles and the topology of the mesh, rather than the triangles.

The triangles are only used in the beginning to construct the graph, the edges and edge valences, and the quadrics of the vertices. Additionally, the initial triangles are used at the end of the simplification process, allowing an easy conversion from the graph-based to the triangle-based representation.

According to an embodiment, an edge collapse method is used to reduce a number of vertices, edges and polygons in the at least one graph.

According to an embodiment, a quadric error metric is used to find a new position for a merged vertex for the edge collapse method.

By using quadric error metric to evaluate an error of an edge collapse that only requires the quadrics at the vertices, multiple edge collapses can be evaluated independently, as long as they do not share any vertex. A set of edges that do not share a vertex is in the following referred to as a matching. For a simplification step, first all edges may be evaluated, and then a matching gets calculated.

A matching is a subset of the edges of a graph that do not share any vertices. It is well suited for parallel mesh simplification which is based on a QEM edge-collapse approach, because when evaluating the cost of an edge, only the quadrics of the vertices of that edge are needed.

Because no two edges in a matching share a vertex, the estimated error for all edges of the matching is accurate even when collapsing the whole matching at once.

The matching should contain as many of the best edges that currently exist as possible. Thus, edges that are local best, i.e. edges that have a lower error than all edges that share a vertex with them may identified repeatedly.

At any time, an edge can have one of three possible states. An edge can either already be part of the matching, share a vertex with an edge that is in the matching and thereby be blocked or be available to be added to the matching.

According to an embodiment, the simplification of the at least one graph is iteratively repeated, wherein each iteration step comprises three parts: First, for every vertex an index of an available incident edge with a lowest error is identified and saved, second every available edge is checked to see if it is favored by both its vertices and, thereby, the local best edge, and if an edge is the local best, it is added to a matching and its vertices are flagged as deleted, third, for every available edge it is checked if one of its vertices is flagged as deleted and set as blocked if needed.

An iteration step may consist of three parts. First, every vertex identifies and saves the index of the available incident edge with the lowest error. This part can operate completely parallel over the vertices. In the next part, every available edge is checked to see if it is favored by both its vertices and, thereby, the local best edge. If an edge is the local best, it can be added to the matching, and its vertices can be flagged as deleted. This part can be operated in parallel over the edges. Because only one edge can be favored by a vertex, only one edge might try to flag the vertex as deleted, and all other edges that contain that vertex are not the local best. Alternatively, this step could be implemented as an iteration, that runs over F, because doing it that way, only available edges that are favored at least once get checked. In the last part, every available edge checks if one of its vertices is flagged as deleted and sets itself as blocked if needed. This step operates again in parallel over the edges. These three steps are repeated until a target is reached. Such a target could just be a fixed number of iterations, or too few new edges could be added to the matching, or similar.

According to an embodiment, for simplifying the at least one graph, all edges get evaluated and corresponding matches are calculated and sorted, wherein a set of candidates is selected form the sorted matches, and wherein a ratio of all matched edges that gets selected is set according to a predefined parameter.

After the matching is calculated, the matched edges get sorted, and the best candidates get selected. The ratio of all matched edges that get selected is an input parameter of the simplification algorithm and is called the aggressiveness. Since the matching spans the whole mesh, an aggressiveness of 100% leads to a fairly uniformly simplified mesh. The lower the aggressiveness, the more selective is the algorithm and the better can it adapt to situations where mostly only a small part of the mesh needs to be simplified. The sorting of the edges in the matching is required to apply the aggressiveness ratio. It is analogous to the sorting of all edges required to construct the priority queue in the base algorithm.

In order to evaluate the error of the collapse of all edges, each edge merges its vertex data, and the resulting error of the merged vertex is the error of the edge collapse. For the following iterations, only edges adjacent to successfully collapsed edges need to reevaluate their resulting error. To track the edges, an edge state is used. It includes the states needed for the matching subroutine. Additionally, it is used to track edges that were selected in the previous iteration and failed. Every selected edge that exists in the following iteration failed to get collapsed. It then gets ignored in the selection for the matching to prevent the simplification getting stuck.

According to an embodiment, the edges selected for matching are filtered based on an order of the edges.

Not all selected edges might be collapsible. The selection process only considered the quadric error, but in rare cases an edge collapse might be undesirable even if it has a low quadric error.

For example, a non-manifold or a normal flip might be created. Therefore, all selected edges need to be verified, and all collapses that do not satisfy the constraints get filtered.

The different edge collapses might interfere with each other, and therefore, the edges cannot be verified independently. Instead, the order of the selected edges is used to simulate a serial order. For every collapsed edge, a merged neighborhood is constructed. An entry in this neighborhood consists of the edge index, the vertex index that gets reached, and a boolean indicating if the edge started at the first or second vertex of the edge that gets merged. This merged neighborhood is transformed to represent the situation at that collapse, where only earlier collapses are taken into consideration. These merged neighborhoods then get checked for manifold preservation and for normal flips.

If an edge fails, it might only fail because an edge with a lower-order index created a problem. Therefore, all failed edges get checked to see if they are the lowest failed collapse in the neighborhood. If they are, they caused a failure themselves and can definitively be flagged as failed, and the collapse is canceled. A neighboring edge collapse might not have failed, because of the now-canceled failure. Therefore, all higher edge-collapses in the neighborhood get reset; they then get updated and checked again. This gets repeated until all failed edges are determined.

According to an embodiment, a matching-based approach may be used to select simplification candidates. The selected candidate edges possess the necessary independence to be collapsed and processed in parallel steps, which results in a good balance between candidate density and update interdependence.

According to an embodiment, the polygons are triangles and/or tetrahedrons.

The method may use updating procedures for compacting the lists after each step, wherein deleted elements are not kept.

To update the vertex indices contained in edges, a vertex map may be used. This map can be stacked onto the total vertex map. Similarly, the vertices can be updated. Again, using the selected edges, the data at the first vertex gets replaced by the merged vertex, and the second vertex gets flagged. In a second step, all flagged vertices get erased. The vertex compacting and vertex map preserve the order of the remaining vertices and therefore represent the same mapping.

To update the edge indices, a map may be used as well. Additionally, the edge data may be updated using a map, whereas the vertex data gets updated independently, because the merging of the edges and which edges get deleted is more complicated. A special map, called the edge join map, that holds the merging and deletion of the edges may be used.

The higher edge gets merged into the lower edge. Thus, the lower edge index gets entered into the join map at the higher edge.

The construction of the edge join map may be done using the merged neighborhoods constructed previously. For every remaining selected edge, the edge itself gets set to be deleted in the edge join map. The merged neighborhood than may be scanned for edges that reach the same vertex but start from the different vertices of the edge. Up to three edges can be merged together by two collapses occurring at both ends of an edge. Therefore, only the lowest edge per starting vertex gets considered. In the edge join map, at the higher edge index, the lower edge index gets entered. This edge join map can then be used to update the edge data and to construct the compacted edge map.

Additionally, the edge join map can be used to update the graph. For this, new counts get calculated. Every vertex counts all non-deleted edges in their neighborhood. For the merged vertices, the counts can be added. The new counts then get cumulated, and every vertex copies its non-deleted incident edges over to the new incident edges list. This list can then be updated using the compacted edge map.

According to an embodiment, an area-weighted averaging is used when constructing a quadric of combined vertices.

On edge collapse, two vertices get merged into a new vertex, and the vertex data needs to get merged as well. In contrast to the simple propagation by just adding the two quadrics, an area-weighted merging may be used.

According to an embodiment, the at least one graph is a sparse graph representation that explicitly contains edges.

According to another embodiment, the subset of edges of the at least one graph that do not share any vertices is selected as the edges that have a lower error than all edges that share a vertex with them.

According to an embodiment, the method comprises the following steps:
1. converting a given mesh to a single graph,
2. computing a matching based on estimated collapse costs.
3. sorting and/or filtering the matched edges,
4. simplifying the graph by collapsing all edges,
5. restart with matching a subset of edges of the graph,
6. generating a second simplified mesh based on the simplified graph.

According to a second aspect, the present invention relates to a system for creating a mesh for simulating an object, wherein the system comprises a plurality of processors configured to carry out an embodiment of the method disclosed herein.

According to a third aspect, the present invention relates to a computer program product comprising instructions which, when the program is executed by a computer, cause the computer to carry out an embodiment of the method disclosed herein.

Further features, details and advantages of the invention are apparent from the wording of the claims and from the following description of embodiments with reference to the drawings.

The figures depicting in:
- Fig. 1: a flow-chart of the method disclosed herein, according to an embodiment,
- Fig. 2: the system disclosed herein, according to an embodiment, and
- Fig. 3: the computer program product disclosed herein, according to an embodiment.

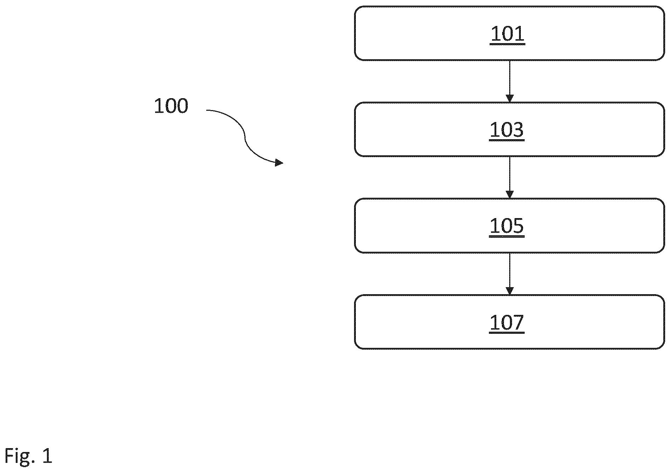

In Fig. 1, a computer-implemented method 100 for creating a mesh for simulating an object is shown.

The method 100 comprises a first generating step 101, in which a first mesh is generated by means of object data of the object, wherein the mesh comprises a plurality of spatially resolved structural information relating to the object.

Further, method 100 comprises a representation step 103, in which the first mesh is represented by at least one graph, i.e. transformed into the at least one graph.

Further, method 100 comprises a simplification step 105, in which the at least one graph is simplified by matching a subset of edges of the at least one graph that do not share any vertex.

Further, method 100 comprises a second generating step 107, in which a second simplified mesh is generated based on the simplified at least one graph.

According to method 100, the matching may be carried out by collapsing edges of the subset of edges, and wherein the matching is carried out simultaneously and in parallel.

According to an example, the following procedure is used to implement method 100.

The most common mesh representation consists of a list of triangles and a list of vertices. Each triangle consists of the three vertex indices in counterclockwise order to encode the normal of the triangle. A vertex list I used that specifies positions of the vertices.

To create the edges, a list initially containing three edges per triangle is used. Every triangle enters its three half-edges into the list. The vertices of each half-edge are sorted by the vertex index instead of ordered by direction. Next, this list gets sorted.

Every edge is contained in the list multiple times, once for every triangle that is incident to the edge. Removing and counting duplicates for every edge leads to two lists: A final compacted edge list, where every edge is only contained once, and corresponding edge valences.

Next, per vertex, an incident edge count is constructed. Every edge increases the count for both vertices. These counts than can be accumulated and form C, the cumulated neighbor counts, that is used for generating the graph.

Further, the edges enter their edge index at the first unused spot into the neighbor list, using C to access the relevant range. The first unused spot can be determined by reinterpreting the counts as empty slots. For both vertices, in every edge, C is used to determine the relevant adjacency range. The counts get accessed and reduced by one to get the slot in range. The edge index then gets entered into that slot.

Quadrics can be constructed by iterating over the triangles, calculating the area and normal. Each triangle contributes to each of its vertices a quadric that is built from the normal, and a third of the area.

If the mesh has borders, additional quadrics can be calculated to artificially constrain the border shape. This can be implemented by first using the edge valence to mark all border vertices. If a triangle contains two border vertices, the connecting edge gets verified as a border using the valences, and the artificial quadric gets calculated.

The construction of the second mesh, i.e. the final mesh may be done by constructing the final triangles and the final vertex positions. The vertex positions are contained in the data of the graph representation of the first mesh, which is held per vertex and, therefore, simply can be copied.

The triangles are not directly represented within the graph. However, an updated triangle list can easily be constructed by updating the vertices of all old triangles using the vertex map that represents the simplification step 105.

Any triangle that becomes degenerate after the update is skipped, and only the non-degenerate triangles get collected, which enables to ignore the triangles for the whole simplification step 105 by simply remembering the merged vertices in a vertex map.

In an exemplary algorithm, the following steps are performed:
- some vertices are deleted and the vertex list is compacted,
- some vertices are replaced by merged vertices,
- some edges get merged with other edges by combining the edge valences and edge states,
- the deleted edges are removed, and the edge list is compacted,
- the vertex indices of the edges are updated,
- the graph is updated.
- new neighbors per vertex are determined,
- new edge indices are entered,
- the state of edges, which will be incident to merged vertices, are reset to be available,
- the vertex map is added.

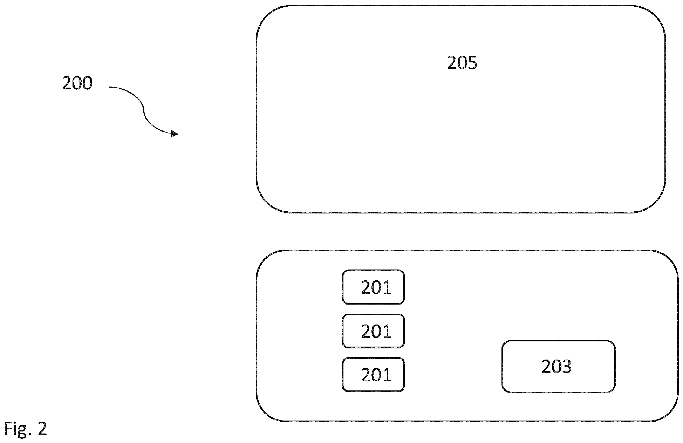

In Fig. 2, a system 200 for creating a mesh for simulating an object is shown. The system 200 comprises a plurality of processors 201, a memory 203 and a display device 205.

By running a program stored in the memory 203, the processors 201 are used to execute the method 100 according to Fig. 1.

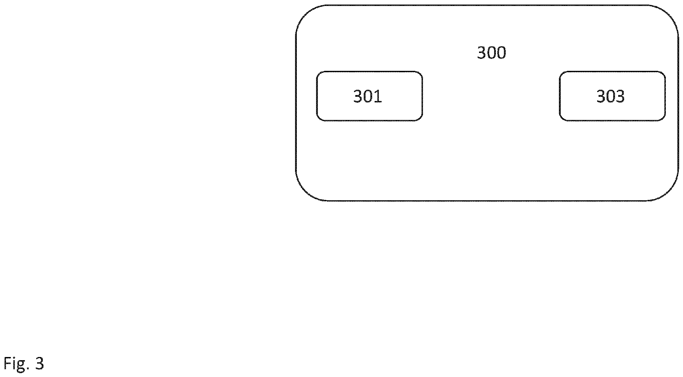

In Fig. 3, a computer program product 300 is shown. The computer program product 300 comprises a first algorithm 301 for vertex map construction and a second algorithm 303 for graph-based mesh simplification.

According to an example, the first algorithm 301 specifies:
Vertex map construction
Result: The vertex map V
Input: The selected edge indices S to collapse; all edges E
Output: A vector, containing the new vertex index per old vertex index

```
 1 initialize V with an invalid value
 2 for ei ∈ S do in parallel
 3 (v0, v1) = E[ei]
 4 E[v1] = v0
 5 vnew = 0
 6 for vi ∈ V do
 7 if vi is invalid then
 8 vi ← vnew
 9 vnew ← vnew + 1
 10 else
 11 vi <-- V[vi]
 12 return V
```

According to another example, the second algorithm 303 specifies:
Graph based mesh simplification
Result: Simplified mesh
Input: Original mesh consisting of triangles and vertex positions
Data: vertex data, edge data, graph, vertex map representing the simplification
   1 Setup the data
   2 while target not met do
   3 Selection of edges to collapse
   4 Filtering selected edges that violate constraints
   5 Updating the graph and remember the simplification
   6 Final mesh construction
   7 return final mesh

The invention is not limited to one of the embodiments described above, but can be modified in a variety of ways.

All the features and advantages resulting from the claims, the description and the drawing, including design details, spatial arrangements and process steps, can be essential to the invention both individually and in a wide variety of combinations.

### List of reference signs

- 100: method
- 101: first generating step
- 103: representation step
- 105: simplification step
- 107: second generating step
- 200: system
- 201: processor
- 203: memory
- 205: display device
- 300: computer program product
- 301: first algorithm
- 303: second algorithm

## Claims

1. Computer-implemented method (100) for creating a mesh for simulating an object,
the method (100) comprising:
- generating (101) a first mesh by means of object data of the object,
wherein the mesh comprises a plurality of spatially resolved structural information relating to the object,
- representing (103) the first mesh by at least one graph,
- simplifying (105) the at least one graph by matching a subset of edges of the at least one graph that do not share any vertex,
- generating (107) a second simplified mesh based on the simplified at least one graph,
wherein the matching is carried out simultaneously and in parallel using a plurality of processors.

2. Method (100) according to any of the preceding claims,
**characterized in that**,
the at least one graph represents the first mesh, wherein edges are used instead of triangles.

3. Method (100) according to claim 1 or 2,
**characterized in that**,
for simplifying (105) the at least one graph, all edges get evaluated and corresponding matches are calculated and sorted,
wherein a set of candidates is selected form the sorted matches, and
wherein a ratio of all matched edges that gets selected is set according to a predefined parameter.

4. Method (100) according to any of the preceding claims,
**characterized in that**,
the edges selected for matching are filtered based on an order of the edges.

5. Method (100) according to any of the preceding claims,
**characterized in that**,
generating (107) the second simplified mesh comprises replacing the edges of the at least one graph by triangles.

6. Method (100) according to claim 5,
**characterized in that**,
edge valence is used to encode a surface connectivity of the triangles into edges.

7. Method (100) according to any of the preceding claims,
**characterized in that**,
an edge collapse method is used to reduce a number of vertices, edges and polygons in the at least one graph.

8. Method (100) according to claim 7,
**characterized in that**,
a quadric error metric is used to find a new position for a merged vertex for the edge collapse method.

9. Method (100) according to claim 7 or 8,
**characterized in that**,
the polygons are triangles and/or tetrahedrons.

10. Method (100) according to claim 8,
**characterized in that**,
an area-weighted averaging is used when constructing a quadric of combined vertices.

11. Method (100) according to any of the preceding claims,
**characterized in that**,
the at least one graph is a sparse graph representation that explicitly contains edges.

12. Method (100) according any of the preceding claims,
**characterized in that**,
the subset of edges of the at least one graph that do not share any vertices is selected as the edges that have a lower error than all edges that share a vertex with them.

13. Method (100) according to any of the preceding claims
**characterized in that**,
the simplification (105) of the at least one graph is iteratively repeated, wherein each iteration step comprises three parts:
- first, for every vertex an index of an available incident edge with a lowest error is identified and saved,
- second every available edge is checked to see if it is favored by both its vertices and, thereby, the local best edge, and if an edge is the local best, it is added to a matching and its vertices are flagged as deleted, and
- third, for every available edge it is checked if one of its vertices is flagged as deleted and set as blocked if needed.

14. System (200) for creating a mesh for simulating an object,
the system (200) comprising a plurality of processors (201) configured to carry out a method (100) according any of claim 1 to 13.

15. Computer program product (300) comprising instructions which, when the program is executed by a computer, cause the computer to carry out the method (100) according to any of claim 1 to 13.
